# EUROPEAN PATENT APPLICATION

(11) **EP 4 388 891 A1**
(43) Date of publication of application: **26.06.2024**
(21) Application number: 22858496.7
(22) Date of filing: 17.08.2022
(51) Int. Cl.: A23L 27/00, A23L 7/10, A23L 7/109, A23L 23/00, A23L 27/40

(54) **MINERAL-CONTAINING COMPOSITION FOR ADDITION TO FOOD**

(30) Priority: 17.08.2021 JP 2021132854
(71) Applicant: Suntory Holdings Limited, Osaka 530-8203 (JP)
(72) Inventor: SOGUCHI, Akira, Kawasaki-shi, Kanagawa 211-0067 (JP); OHKURI, Tadahiro, Kawasaki-shi, Kanagawa 211-0067 (JP); TERAMOTO, Yuki, Kawasaki-shi, Kanagawa 211-0067 (JP); FUJIE, Akiko, Kawasaki-shi, Kanagawa 211-0067 (JP); NAGAYAMA, Takahito, Kawasaki-shi, Kanagawa 211-0067 (JP); OSADA, Tomoya, Kawasaki-shi, Kanagawa 211-0067 (JP)
(74) Representative: Vossius & Partner Patentanwälte Rechtsanwälte mbB
(86) International application number: PCT/JP2022/031115
(87) International publication number: WO 2023/022178

(57) **Abstract**

Provided is a mineral-containing composition for a food additive that enhances flavor (increases umami and/or umami richness) and improves noodle firmness and/or glossiness when added to a food, wherein potassium ion has the highest content among the metal ions present in the mineral-containing composition, and the chloride ion content of the mineral-containing composition is not more than 50% of the potassium ion content.

## Description

### FIELD

The present invention relates to a mineral-containing composition to be added to a food. The invention further relates to a food with enhanced flavor (especially increased umami and/or umami richness) by addition of the mineral-containing composition, or a food with enhanced noodle firmness and/or glossiness, and a method for producing it.

### BACKGROUND

Large amounts of PET bottled mineral water has come to be consumed in recent years throughout the world, as interest in safe and good tasting water has been increasing in society from the viewpoint of health consciousness and taste consciousness. However, the trash created by plastic containers such as PET bottles has become serious environmental problem, and demand has therefore arisen for development of mineral water that can be provided more easily in homes and similar locations, instead of packaged mineral water. Tap water, however, includes chlorine for sterilization which produces residual calcium odor in the water, thus significantly impairing its flavor.

Drinking water prepared by adding high concentrations of minerals to purified water has also been developed for the purpose of supplying trace mineral components necessary for physiological function of the body. PTL 1, for example, discloses production of drinking water comprising high-concentration magnesium, by mixing purified water with a concentrate having a high magnesium content. PTL 2 discloses production of a beverage with addition of mineral components including magnesium and calcium to water prepared from deep sea water. However, divalent metal ions are known to produce a bitter or harsh taste, and water, foods or beverages containing such minerals at high concentration are therefore less pleasant to ingest.

PTL 3 discloses a method for producing mineral water in which natural ore such as maifan stone, tenju stone or tourmaline is immersed in water to elute the mineral components, but the method has drawbacks because the obtained mineral water includes undesirable components such as vanadium which are harmful when ingested in excess, and the extraction efficiency for the minerals is not very high. PTL 4 discloses a method for producing mineral water by hot extraction of poultry manure charcoal, but poultry manure charcoal is unsuitable as a starting material for foods.

PTL 5 discloses a method for producing mineral water by boiling extraction of bamboo charcoal, while PTL 6 discloses the use of alkaline water obtained by boiling extraction of charcoal as a starting material for food. With the methods disclosed in these publications, however, it has not been possible to efficiently extract mineral components to obtain mineral-containing compositions containing only the desired mineral components. Moreover, while the publications mention the health promoting effects of the mineral components, they do not disclose their use for improving flavors of the foods themselves.

### [CITATION LIST]

### [PATENT LITERATURE]

[PTL 1] Japanese Unexamined Patent Publication No. 2018-102137
[PTL 2] Japanese Unexamined Patent Publication No. 2008-48742
[PTL 3] Japanese Unexamined Patent Publication No. 2009-72723
[PTL 4] Japanese Unexamined Patent Publication HEI No. 6-31284
[PTL 5] Japanese Unexamined Patent Publication No. 2005-334862
[PTL 6] Japanese Unexamined Patent Publication No. 2001-259659

### [NON PATENT LITERATURE]

[NPL 1] Abe, I., Kasseitan no Seizou Houhou, Tanso, Serialized Course, 2006, No. 225, 373-381

### SUMMARY

### [TECHNICAL PROBLEM]

It is an object of the present invention to provide a food with enhanced flavor (especially increased umami and/or umami richness), and a food with enhanced noodle firmness and/or glossiness.

### [SOLUTION TO PROBLEM]

The present inventors have discovered activated carbon from plant-derived starting materials, such as coconut shell activated carbon, as natural materials with which minerals can be eluted using purified water, and as a result of earnestly examining the extraction conditions, have succeeded in conveniently and efficiently producing a mineral extract containing an abundant amount of potassium as a highly important mineral component for humans. The present inventors have further found that the mineral extract and a mineral concentrate obtained by concentrating it, not only include an abundant amount of potassium mineral component but also have significantly low contents of divalent metal ions and chloride ion which produce a bitter and harsh taste. As a result of still further research on the components of the obtained mineral extract, the present inventors found, surprisingly, that the mineral-containing composition functions to enhance food flavor (especially increasing umami and/or umami richness), and also functions to increase noodle firmness and/or glossiness.

Specifically, the main gist of the present invention is as follows.
[1] A mineral-containing composition for a food additive, wherein potassium ion has the highest content among the metal ions present in the mineral-containing composition, and the chloride ion content of the mineral-containing composition is not more than 50% of the potassium ion content.
[2] The mineral-containing composition according to [1] above, wherein the mineral-containing composition has a pH of 7.5 to 10.5.
[3] The mineral-containing composition according to [1] or [2] above, wherein the food is soup, noodles, rice, or a combination thereof.
[4] The mineral-containing composition according to [3] above, wherein the food is a low-salt type.
[5] The mineral-containing composition according to [3] or [4] above, wherein the soup is miso soup, pork soup, consomme soup, corn soup, onion soup, vegetable soup, egg soup or soup stock.
[6] The mineral-containing composition according to any one of [1] to [5] above, wherein the mineral-containing composition further includes calcium ion, magnesium ion, sodium ion, iron ion, zinc ion, silicon ion and/or sulfate ion.
[7] The mineral-containing composition according to any one of [1] to [6] above, wherein the calcium ion content in the mineral-containing composition is not more than 2.0% of the potassium ion content.
[8] The mineral-containing composition according to any one of [1] to [7] above, wherein the magnesium ion content in the mineral-containing composition is not more than 1.0% of the potassium ion content.
[9] The mineral-containing composition according to any one of [1] to [8] above, wherein the sodium content in the mineral-containing composition is 5 to 45% of the potassium ion content.
[10] The mineral-containing composition according to any one of [1] to [9] above, wherein the mineral-containing composition includes an activated carbon extract of a plant-derived starting material.
[11] The mineral-containing composition according to [10] above, wherein the plant-derived starting material is selected from among hulls of coconut, palm, almond, walnut or plum; wood materials selected from among sawdust, charcoal, resin and lignin; fly ash; bamboo; food residues selected from among bagasse, rice husk, coffee bean and molasses; and combinations of the foregoing.
[12] The mineral-containing composition according to any one of [1] to [11] above, which is to be used for enhancing food flavor.
[13] The mineral-containing composition according to any one of [1] to [11] above, which is to be used for increasing umami and/or umami richness.
[14] The mineral-containing composition according to [13] above, wherein the umami and/or umami richness is evaluated using a taste sensor.
[15] The mineral-containing composition according to any one of [1] to [11] above, which is to be used for improving noodle firmness and/or glossiness.
[16] A method for producing a food with enhanced flavor, which includes a step of adding a mineral-containing composition according to any one of [1] to [11] above to a food whose flavor is to be enhanced.
[17] A method for producing a food with increased umami and/or umami richness, which includes a step of adding a mineral-containing composition according to any one of [1] to [11] above to a food whose umami and/or umami richness is to be increased.
[18] The method according to [17] above, wherein the umami and/or umami richness is evaluated using a taste sensor.
[19] The method according to any one of [16] to [18] above, wherein the food is soup, noodles, rice, or a combination thereof, and the mineral-containing composition is added to an added potassium ion concentration of 50 ppm to 300 ppm.
[20] The method according to [19] above, wherein when the soup is miso soup, and the miso soup has a pH of 5.7 to 7.1 after the mineral-containing composition has been added.
[21] A method for producing a food with enhanced noodle firmness and/or glossiness, which includes a step of boiling noodles whose firmness and/or glossiness is to be enhanced, in water to which a mineral-containing composition according to any one of [1] to [11] above has been added.
[22] A food with enhanced flavor, which includes a mineral-containing composition according to any one of [1] to [11] above.
[23] A food with increased umami and/or umami richness, which includes a mineral-containing composition according to any one of [1] to [11] above.
[24] The food according to [23] above, wherein the umami and/or umami richness is evaluated using a taste sensor.
[25] The food according to any one of [22] to [24] above, wherein the food is soup, noodles, rice, or a combination thereof, and the food includes potassium ion at an added potassium ion concentration of 50 ppm to 300 ppm.
[26] The food according to [25] above, wherein the soup is miso soup having a pH of 5.7 to 7.1.
[27] A food with enhanced noodle firmness and/or glossiness, which includes a mineral-containing composition according to any one of [1] to [11] above.

### [ADVANTAGEOUS EFFECTS OF INVENTION]

The present invention can conveniently provide a food with enhanced flavor (especially increased umami and/or umami richness), and a food with enhanced noodle firmness and/or glossiness.

### BRIEF DESCRIPTION OF DRAWINGS

Fig. 1 is a graph showing the buffer capacity of a water composition containing added mineral concentrate extract from coconut shell activated carbon, at different concentrations, and a control (KOH and commercially available alkali ion water).
Fig. 2 is a graph showing the buffer capacity of a water composition containing added mineral concentrate extract from coconut shell activated carbon, prepared to a final potassium concentration of 100 ppm, and a control (purified water and commercially available alkali ion water).
Fig. 3 shows analysis results from a taste sensor for normal and low-salt miso soup, with addition of mineral concentrate extracts (potassium concentrations: 100 ppm, 300 ppm).
Fig. 4 shows analysis results from a taste sensor for normal and low-salt miso soup, with addition of potassium chloride (potassium concentrations: 100 ppm, 300 ppm).

### DESCRIPTION OF EMBODIMENTS

The present invention relates to a mineral-containing composition for a food additive, wherein potassium ion has the highest content among the metal ions present in the mineral-containing composition, and the chloride ion content of the mineral-containing composition is not more than 50% of the potassium ion content.

Potassium is an essential mineral for the body where it is mostly found inside body cells and interacts with sodium that is primarily present in extracellular fluid, and it plays an important role in maintaining cellular osmotic pressure and retaining intracellular moisture. Potassium, together with sodium, maintains cellular osmotic pressure while also playing a role in maintenance of acid-base equilibrium, transmission of nerve stimulations, regulation of cardiac function and muscle function, and regulation of intracellular enzyme reactions. Potassium is also known to inhibit reabsorption of sodium in the kidneys and promote its excretion into the urine, thereby have a blood pressure-lowering effect. Potassium is therefore an extremely important mineral component for humans, but excess potassium ion produces a bitter or harsh taste. Therefore, the mineral-containing composition of the invention is preferably adjusted for the optimal potassium concentration to be added to foods.

Naturally occurring water sources contain a fixed amount of chloride ion, with most sources being derived from the ground or seawater. When chloride ion is present at 250 to 400 mg/l or greater, persons with higher sensitivity perceive a salt flavor which can potentially impair the taste, and therefore the chloride ion content of the mineral-containing composition of the invention is preferably as low as possible. The chloride ion content of the mineral-containing composition of the invention is, for example, not more than 50%, not more than 49%, not more than 48%, not more than 47%, not more than 46%, not more than 45%, not more than 44%, not more than 43%, not more than 42%, not more than 41%, not more than 40%, not more than 39%, not more than 38%, not more than 37%, not more than 36%, not more than 35%, not more than 34%, not more than 33%, not more than 32%, not more than 31%, not more than 30%, not more than 29%, not more than 28%, not more than 27%, not more than 26%, not more than 25%, not more than 24%, not more than 23%, not more than 22%, not more than 21%, not more than 20%, not more than 19%, not more than 18%, not more than 17%, not more than 16%, not more than 15%, not more than 14%, not more than 13%, not more than 12%, not more than 11%, not more than 10%, not more than 9%, not more than 8%, not more than 7%, not more than 6%, not more than 5%, not more than 4%, not more than 3%, not more than 2% or not more than 1%, of the potassium ion content.

The mineral-containing composition of the invention has a pH of preferably 7.5 to 10.5, 7.5 to 10.0, 7.5 to 9.5, 7.5 to 9.0, 7.5 to 8.5, 7.5 to 8.0, 8.0 to 10.5, 8.0 to 10.0, 8.0 to 9.5, 8.0 to 9.0, 8.0 to 8.5, 8.5 to 10.5, 8.5 to 10.0, 8.5 to 9.5, 8.5 to 9.0, 9.0 to 10.5, 9.0 to 10.0, 9.0 to 9.5, 9.5 to 10.5, 9.5 to 10.0 or 10.0 to 10.5, for example. The mineral-containing composition of the invention may have a buffer capacity, and water containing the mineral-containing composition of the invention preferably has a significant buffer capacity in the pH range from weakly alkaline to weakly acidic. For example, when the buffer capacity is defined as the ratio (B)/(A), where (A) is the liquid volume (mL) required for lowering from pH 9.2 to pH 3.0 in titration with 0.1 M hydrochloric acid against 100 g of sodium hydroxide solution prepared to pH 9.2, and (B) is the liquid volume (mL) required for lowering from pH 9.2 to pH 3.0 when water containing the added mineral-containing composition of the invention is titrated using 0.1 M hydrochloric acid, the amount of water added to the mineral-containing composition of the invention has a buffer capacity of, for example, 1.5 or greater, 1.6 or greater, 1.7 or greater, 1.8 or greater, 1.9 or greater, 2.0 or greater, 2.1 or greater, 2.2 or greater, 2.3 or greater, 2.4 or greater, 2.5 or greater, 2.6 or greater, 2.7 or greater, 2.8 or greater, 2.9 or greater, 3.0 or greater, 3.5 or greater, 4.0 or greater, 4.5 or greater, 5.0 or greater, 5.5 or greater, 6.0 or greater, 6.5 or greater, 7.0 or greater, 7.5 or greater, 8.0 or greater, 8.5 or greater, 9.0 or greater, 9.5 or greater, 10.0 or greater, 10.5 or greater, 11.0 or greater or 11.5 or greater.

There are no particular restrictions on the food to which the mineral-containing composition of the invention is to be added, but it will typically be soup, noodles, rice, or a combination thereof. The food to which the mineral-containing composition of the invention is to be added may also be a low-salt type food. Examples of soups include miso soup, pork soup, consomme soup, corn soup, onion soup, vegetable soup and egg soup, with miso soup being preferred. Miso soup is a food containing ingredients such as vegetables, tofu, bran or seafoods added to soup stock seasoned with miso. Miso is a fermented food produced by adding salt and malt to soybean or cereals such as rice or barley and fermenting it, and the miso used in miso soup is not particularly restricted and may be rice miso obtained by fermentation or ageing of soybean and rice, barley miso obtained by fermentation or ageing of soybean and barley or naked barley, bean miso obtained by fermentation or ageing of soybean, or mixed miso obtained by combining any of the aforementioned miso types. The form of miso soup is not particularly restricted and may be a raw type or a freeze-dry type of instant miso soup, for example. The soup may also be the soup stock itself. Soup stock is an extract obtained by boiling a food material containing glutamic acid, or flavorful nucleotides such as inosinic acid or guanylic acid. The soup stock material is not particularly restricted and may be an umami seasoning such as bonito, tangle weed, dried sardines, shiitake, vegetables, fish scraps or amino acids. Examples of noodles include ramen, pasta and udon noodles, with ramen being preferred. Examples of ramen include miso ramen, salt ramen, pork bone ramen, soy sauce ramen, seafood ramen and cup ramen. Examples of rice include cooking rice, risotto, takikomi rice and kettle rice.

The mineral-containing composition of the invention may further include, in addition to potassium ion or chloride ion, also calcium ion, magnesium ion, sodium ion, iron ion, zinc ion, silicon ion and/or sulfate ion.

In the body, calcium, together with phosphorus, forms skeleton as hydroxyapatite, and is also known to be involved in muscle contraction. Magnesium is known to form bone and teeth in the body, and to participate in enzyme reactions and energy production in the body as well. The calcium ion and magnesium ion contents in water are also known to affect taste, and among the minerals found in water, the index of the total content of calcium and magnesium (hardness) is used to distinguish between soft water at below a specified level, or hard water at above that level. Mineral water produced in Japan is most usually soft water, whereas Europe mostly produces hard water. The WHO criteria, using American hardness (mg/l) as the amount of salts in terms of calcium carbonate, establishes soft water as 0 to 60, hard water as 120 to 180, and very hard water as 180 or above. Water of moderate hardness (10 to 100 mg/l) is generally considered to be "delicious", while a particularly high magnesium content results in stronger bitterness and a less pleasant taste. An excessively high hardness not only affects the taste sensation but is also undesirable as it may cause gastrointestinal irritation, potentially leading to diarrhea. The calcium ion content of the mineral-containing composition of the invention is, for example, not more than 2.0%, not more than 1.9%, not more than 1.8%, not more than 1.7%, not more than 1.6%, not more than 1.5%, not more than 1.4%, not more than 1.3%, not more than 1.2%, not more than 1.1%, not more than 1.0%, not more than 0.9%, not more than 0.8%, not more than 0.7%, not more than 0.6%, not more than 0.5%, not more than 0.4%, not more than 0.3%, not more than 0.2%, not more than 0.1%, not more than 0.09%, not more than 0.08%, not more than 0.07%, not more than 0.06%, not more than 0.05%, not more than 0.04%, not more than 0.03%, not more than 0.02% or not more than 0.01%, of the potassium ion content. The magnesium ion content of the mineral-containing composition of the invention is, for example, not more than 1.0%, not more than 0.9%, not more than 0.8%, not more than 0.7%, not more than 0.6%, not more than 0.5%, not more than 0.4%, not more than 0.3%, not more than 0.2%, not more than 0.1%, not more than 0.09%, not more than 0.08%, not more than 0.07%, not more than 0.06%, not more than 0.05%, not more than 0.04%, not more than 0.03%, not more than 0.02% or not more than 0.01%, of the potassium ion content.

Sodium holds moisture while maintaining extracellular fluid volume and circulating blood volume in the body, and regulating blood pressure. It is known that a minimum amount of sodium ion needs to be ingested for effective replenishment of moisture to the body, and it is therefore particularly effective as a countermeasure against heatstroke. Excessive sodium intake, however, increases liquid volume which can raise blood pressure and lead to swelling. Increasing sodium ion content produces a salty flavor and slimy feel, often impairing the refreshing feel of a beverage. The sodium content in the mineral-containing composition of the invention may be, for example, 5 to 45%, 5 to 40%, 5 to 35%, 5 to 30%, 5 to 25%, 5 to 20%, 5 to 15%, 5 to 10%, 10 to 45%, 10 to 40%, 10 to 35%, 10 to 30%, 10 to 25%, 10 to 20%, 10 to 15%, 15 to 45%, 15 to 40%, 15 to 35%, 15 to 30%, 15 to 25%, 15 to 20%, 20 to 45%, 20 to 40%, 20 to 35%, 20 to 30%, 20 to 25%, 25 to 50%, 25 to 45%, 25 to 40%, 25 to 35%, 25 to 30%, 30 to 45%, 30 to 40%, 30 to 35%, 35 to 45%, 35 to 40% or 40 to 45%, of the potassium ion content.

The mineral-containing composition of the invention can be produced from an activated carbon extract of a plant-derived starting material. Activated carbon is a porous substance comprising mostly carbon but also oxygen, hydrogen and calcium, and because of its large surface area per volume it exhibits adsorption properties for a large number of substances, for which reason it has been widely produced in industry since the beginning of the 20th century until now. Activated carbon is generally produced by formation of micropores on the nm order (activation) inside a starting carbon material. Methods for producing activated carbon are largely divided into gas activation methods in which a starting material is carbonized and an activating gas such as water vapor or carbon dioxide is subsequently used for activation treatment at high temperature, and chemical activation methods in which a chemical such as zinc chloride or phosphoric acid is added to the starting material before heating in an inert gas atmosphere to simultaneously cause carbonization and activation (NPL 1). Activated carbon according to the invention may be produced by using a plant-derived starting material as the carbon material in either a gas activation method or a chemical activation method. Since the activated carbon of the invention is to be used as an extraction source for mineral components, the activated carbon is preferably not washed with a strong acid such as hydrochloric acid.

Starting materials for the activated carbon to be used for the invention are not particularly restricted so long as they are plant-derived starting materials, and examples include fruit hulls (coconut, palm, almond, walnut or plum), wood materials (sawdust, charcoal, resin or lignin), fly ash (carbides of sawdust), bamboo, food residues (bagasse, rice husk, coffee bean or molasses) and waste (pulp mill waste liquids or construction scrap materials), and typically coconut shell, sawdust or bamboo, or a combination thereof, will be selected, with coconut shells being preferred. Coconut shell is the shell part inside coconut or palm fruit.

The form of the activated carbon used for the invention is not particularly restricted, and examples include powdered activated carbon, granular activated carbon (crushed charcoal, granulated charcoal and molded charcoal), fibrous activated carbon, and specially shaped activated carbon.

The process for extracting minerals using an aqueous solvent from plant starting material-derived activated carbon is carried out by contacting the aqueous solvent with the plant starting material-derived activated carbon and eluting out the minerals in the plant starting material-derived activated carbon. The process it not particularly restricted so long as the minerals can be eluted out from the plant starting material-derived activated carbon, and for example, the plant starting material-derived activated carbon may be immersed in the aqueous solvent, or the aqueous solvent may be passed through a column filled with the plant starting material-derived activated carbon. While the plant starting material-derived activated carbon is immersed in the aqueous solvent, the aqueous solvent may also be stirred to increase the extraction efficiency. The method for producing the mineral extract of the invention may also include, after the step of using an aqueous solvent to extract the minerals from the plant starting material-derived activated carbon, a step of centrifugal separation of the obtained extract to remove the impurities, and/or a filtering step.

The aqueous solvent used in the step of extracting the minerals from the plant starting material-derived activated carbon using the aqueous solvent is basically a liquid other than an HCl solution. It will typically be a water solvent, with purified water being especially preferred. Purified water is water of high purity that is free or essentially free of impurities such as salts, residual chlorine, insoluble microparticles, organic materials or non-electrolytic gas. Purified water includes RO water (water passed through a reverse osmosis membrane), deionized water (water with the ions removed by an ion exchange resin) and distilled water (water distilled using a distiller), according to the method of removing the impurities. Since purified water does not contain mineral components it provides no effect of replenishing minerals.

The extraction temperature is not particularly restricted so long as it allows extraction of minerals from the plant starting material-derived activated carbon using the aqueous solvent, and the step of extracting minerals from the plant starting material-derived activated carbon using the aqueous solvent may be carried out at a temperature of 5°C or higher, 10°C or higher, 15°C or higher, 20°C or higher, 25°C or higher, 30°C or higher, 35°C or higher, 40°C or higher, 45°C or higher, 50°C or higher, 55°C or higher, 60°C or higher, 65°C or higher, 70°C or higher, 75°C or higher, 80°C or higher, 85°C or higher, 90°C or higher or 95°C or higher, such as a temperature of 5 to 95°C, 5 to 90°C, 5 to 85°C, 5 to 80°C, 5 to 75°C, 5 to 70°C, 5 to 65°C, 5 to 60°C, 5 to 55°C, 5 to 50°C, 5 to 45°C, 5 to 40°C, 5 to 35°C, 5 to 30°C, 5 to 25°C, 5 to 20°C, 5 to 15°C, 5 to 10°C, 10 to 95°C, 10 to 90°C, 10 to 85°C, 10 to 80°C, 10 to 75°C, 10 to 70°C, 10 to 65°C, 10 to 60°C, 10 to 55°C, 10 to 50°C, 10 to 45°C, 10 to 40°C, 10 to 35°C, 10 to 30°C, 10 to 25°C, 10 to 20°C, 10 to 15°C, 15 to 95°C, 15 to 90°C, 15 to 85°C, 15 to 80°C, 15 to 75°C, 15 to 70°C, 15 to 65°C, 15 to 60°C, 15 to 55°C, 15 to 50°C, 15 to 45°C, 15 to 40°C, 15 to 35°C, 15 to 30°C, 15 to 25°C, 15 to 20°C, 20 to 95°C, 20 to 90°C, 20 to 85°C, 20 to 80°C, 20 to 75°C, 20 to 70°C, 20 to 65°C, 20 to 60°C, 20 to 55°C, 20 to 50°C, 20 to 45°C, 20 to 40°C, 20 to 35°C, 20 to 30°C, 20 to 25°C, 25 to 95°C, 25 to 90°C, 25 to 85°C, 25 to 80°C, 25 to 75°C, 25 to 70°C, 25 to 65°C, 25 to 60°C, 25 to 55°C, 25 to 50°C, 25 to 45°C, 25 to 40°C, 25 to 35°C, 25 to 30°C, 30 to 95°C, 30 to 90°C, 30 to 85°C, 30 to 80°C, 30 to 75°C, 30 to 70°C, 30 to 65°C, 30 to 60°C, 30 to 55°C, 30 to 50°C, 30 to 45°C, 30 to 40°C, 30 to 35°C, 35 to 95°C, 35 to 90°C, 35 to 85°C, 35 to 80°C, 35 to 75°C, 35 to 70°C, 35 to 65°C, 35 to 60°C, 35 to 55°C, 35 to 50°C, 35 to 45°C, 35 to 40°C, 40 to 95°C, 40 to 90°C, 40 to 85°C, 40 to 80°C, 40 to 75°C, 40 to 70°C, 40 to 65°C, 40 to 60°C, 40 to 55°C, 40 to 50°C, 40 to 45°C, 45 to 95°C, 45 to 90°C, 45 to 85°C, 45 to 80°C, 45 to 75°C, 45 to 70°C, 45 to 65°C, 45 to 60°C, 45 to 55°C, 45 to 50°C, 50 to 95°C, 50 to 90°C, 50 to 85°C, 50 to 80°C, 50 to 75°C, 50 to 70°C, 50 to 65°C, 50 to 60°C, 50 to 55°C, 55 to 95°C, 55 to 90°C, 55 to 85°C, 55 to 80°C, 55 to 75°C, 55 to 70°C, 55 to 65°C, 55 to 60°C, 60 to 95°C, 60 to 90°C, 60 to 85°C, 60 to 80°C, 60 to 75°C, 60 to 70°C, 60 to 65°C, 65 to 95°C, 65 to 90°C, 65 to 85°C, 65 to 80°C, 65 to 75°C, 65 to 70°C, 70 to 95°C, 70 to 90°C, 70 to 85°C, 70 to 80°C, 70 to 75°C, 75 to 95°C, 75 to 90°C, 75 to 85°C, 75 to 80°C, 80 to 95°C, 80 to 90°C, 80 to 85°C, 85 to 95°C, 85 to 90°C or 90 to 95°C.

The extraction time is also not particularly restricted so long as it allows extraction of minerals from the plant starting material-derived activated carbon using the aqueous solvent, and the step of extracting minerals from the plant starting material-derived activated carbon using the aqueous solvent may be carried out for a time period of 5 minutes or longer, 10 minutes or longer, 15 minutes or longer, 20 minutes or longer, 25 minutes or longer, 30 minutes or longer, 35 minutes or longer, 40 minutes or longer, 45 minutes or longer, 50 minutes or longer, 55 minutes or longer, 60 minutes or longer, 65 minutes or longer, 70 minutes or longer, 75 minutes or longer or 80 minutes or longer, such as a time period of 5 to 80 minutes, 5 to 75 minutes, 5 to 70 minutes, 5 to 65 minutes, 5 to 60 minutes, 5 to 55 minutes, 5 to 50 minutes, 5 to 45 minutes, 5 to 40 minutes, 5 to 35 minutes, 5 to 30 minutes, 5 to 25 minutes, 5 to 20 minutes, 5 to 15 minutes, 5 to 10 minutes, 10 to 80 minutes, 10 to 75 minutes, 10 to 70 minutes, 10 to 65 minutes, 10 to 60 minutes, 10 to 55 minutes, 10 to 50 minutes, 10 to 45 minutes, 10 to 40 minutes, 10 to 35 minutes, 10 to 30 minutes, 10 to 25 minutes, 10 to 20 minutes, 10 to 15 minutes, 15 to 80 minutes, 15 to 75 minutes, 15 to 70 minutes, 15 to 65 minutes, 15 to 60 minutes, 15 to 55 minutes, 15 to 50 minutes, 15 to 45 minutes, 15 to 40 minutes, 15 to 35 minutes, 15 to 30 minutes, 15 to 25 minutes, 15 to 20 minutes, 20 to 80 minutes, 20 to 75 minutes, 20 to 70 minutes, 20 to 65 minutes, 20 to 60 minutes, 20 to 55 minutes, 20 to 50 minutes, 20 to 45 minutes, 20 to 40 minutes, 20 to 35 minutes, 20 to 30 minutes, 20 to 25 minutes, 25 to 80 minutes, 25 to 75 minutes, 25 to 70 minutes, 25 to 65 minutes, 25 to 60 minutes, 25 to 55 minutes, 25 to 50 minutes, 25 to 45 minutes, 25 to 40 minutes, 25 to 35 minutes, 25 to 30 minutes, 30 to 80 minutes, 30 to 75 minutes, 30 to 70 minutes, 30 to 65 minutes, 30 to 60 minutes, 30 to 55 minutes, 30 to 50 minutes, 30 to 45 minutes, 30 to 40 minutes, 30 to 35 minutes, 35 to 80 minutes, 35 to 75 minutes, 35 to 70 minutes, 35 to 65 minutes, 35 to 60 minutes, 35 to 55 minutes, 35 to 50 minutes, 35 to 45 minutes, 35 to 40 minutes, 40 to 80 minutes, 40 to 75 minutes, 40 to 70 minutes, 40 to 65 minutes, 40 to 60 minutes, 40 to 55 minutes, 40 to 50 minutes, 40 to 45 minutes, 45 to 80 minutes, 45 to 75 minutes, 45 to 70 minutes, 45 to 65 minutes, 45 to 60 minutes, 45 to 55 minutes, 45 to 50 minutes, 50 to 80 minutes, 50 to 75 minutes, 50 to 70 minutes, 50 to 65 minutes, 50 to 60 minutes, 50 to 55 minutes, 55 to 80 minutes, 55 to 75 minutes, 55 to 70 minutes, 55 to 65 minutes, 55 to 60 minutes, 60 to 80 minutes, 60 to 75 minutes, 60 to 70 minutes, 60 to 65 minutes, 65 to 80 minutes, 65 to 75 minutes, 65 to 70 minutes, 70 to 80 minutes, 70 to 75 minutes or 75 to 80 minutes.

The extract obtained in this manner may be concentrated by a method known in the field, examples of such methods including boiling concentration, vacuum concentration, freezing concentration, film concentration or ultrasonic atomizing separation. Concentration of the mineral extract can produce a mineral concentrate composition as a mineral-containing composition comprising desired minerals such as high-concentration potassium, essentially without altering the composition.

After the step of concentrating the mineral extract, the obtained mineral concentrate composition is preferably placed in refrigerated storage or treated by cold filtration. The cooling temperature will typically be adjusted to 0 to 15°C, and preferably 3 to 10°C, 3 to 9°C, 3 to 8°C, 3 to 7°C or 3 to 6°C. The pH of the mineral concentrate composition is preferably adjusted before refrigerated storage or cold filtration. In this case, the mineral concentrate composition may be adjusted to have a pH of 7.5 to 10.5, 7.5 to 10.0, 7.5 to 9.5, 7.5 to 9.0, 7.5 to 8.5, 7.5 to 8.0, 8.0 to 10.5, 8.0 to 10.0, 8.0 to 9.5, 8.0 to 9.0, 8.0 to 8.5, 8.5 to 10.5, 8.5 to 10.0, 8.5 to 9.5, 8.5 to 9.0, 9.0 to 10.5, 9.0 to 10.0, 9.0 to 9.5, 9.5 to 10.5, 9.5 to 10.0 or 10.0 to 10.5, for example. Such treatment can increase the transparency and produce a mineral concentrate composition with significantly reduced suspended matter and precipitates.

The potassium ion concentration in the mineral-containing composition of the invention may be 1,000 ppm or greater, 2,000 ppm or greater, 3,000 ppm or greater, 4,000 ppm or greater, 5,000 ppm or greater, 6,000 ppm or greater, 7,000 ppm or greater, 8,000 ppm or greater, 9,000 ppm or greater, 10,000 ppm or greater, 11,000 ppm or greater, 12,000 ppm or greater, 13,000 ppm or greater, 14,000 ppm or greater, 15,000 ppm or greater, 16,000 ppm or greater, 17,000 ppm or greater, 18,000 ppm or greater, 19,000 ppm or greater, 20,000 ppm or greater, 21,000 ppm or greater, 22,000 ppm or greater, 23,000 ppm or greater, 24,000 ppm or greater, 25,000 ppm or greater, 26,000 ppm or greater, 27,000 ppm or greater, 28,000 ppm or greater, 29,000 ppm or greater, 30,000 ppm or greater, 31,000 ppm or greater, 32,000 ppm or greater, 33,000 ppm or greater, 34,000 ppm or greater, 35,000 ppm or greater, 36,000 ppm or greater, 37,000 ppm or greater, 38,000 ppm or greater, 39,000 ppm or greater, 40,000 ppm or greater, 41,000 ppm or greater, 42,000 ppm or greater, 43,000 ppm or greater, 44,000 ppm or greater, 45,000 ppm or greater, 46,000 ppm or greater, 47,000 ppm or greater, 48,000 ppm or greater, 49,000 ppm or greater, 50,000 ppm or greater, 51,000 ppm or greater, 52,000 ppm or greater, 53,000 ppm or greater, 54,000 ppm or greater, 55,000 ppm or greater, 56,000 ppm or greater, 57,000 ppm or greater, 58,000 ppm or greater, 59,000 ppm or greater, 60,000 ppm or greater, 61,000 ppm or greater, 62,000 ppm or greater, 63,000 ppm or greater, 64,000 ppm or greater, 65,000 ppm or greater, 66,000 ppm or greater, 67,000 ppm or greater, 68,000 ppm or greater, 69,000 ppm or greater, 70,000 ppm or greater, 71,000 ppm or greater, 72,000 ppm or greater, 73,000 ppm or greater, 74,000 ppm or greater, 75,000 ppm or greater, 76,000 ppm or greater, 77,000 ppm or greater, 78,000 ppm or greater, 79,000 ppm or greater, 80,000 ppm or greater, 81,000 ppm or greater, 82,000 ppm or greater, 83,000 ppm or greater, 84,000 ppm or greater, 85,000 ppm or greater, 86,000 ppm or greater, 87,000 ppm or greater, 88,000 ppm or greater, 89,000 ppm or greater, 90,000 ppm or greater, 91,000 ppm or greater, 92,000 ppm or greater, 93,000 ppm or greater, 94,000 ppm or greater, 95,000 ppm or greater, 96,000 ppm or greater, 97,000 ppm or greater, 98,000 ppm or greater, 99,000 ppm or greater, 100,000 ppm or greater, 110,000 ppm or greater, 120,000 ppm or greater, 130,000 ppm or greater, 140,000 ppm or greater, 150,000 ppm or greater, 160,000 ppm or greater, 170,000 ppm or greater, 180,000 ppm or greater, 190,000 ppm or greater or 200,000 ppm or greater, for example.

The container used to provide the mineral-containing composition of the invention is not particularly restricted, and for example, it may be a metal container (can), a dropwise type, spray type, dropper type or cosmetic water bottle type resin container, a paper container (including cable top-equipped types), a PET bottle, a pouch container, a glass bottle, an airless container, a potion container, a preservative-free (PF) eye drop container, a stick, a small pump container, a large pump container, a potion cup container, an inner bag-equipped bottle, a plastic single-use container or a water-soluble film container.

The mineral-containing composition of the invention may be added to a food to improve the taste of the food. The method for adding the mineral-containing composition of the invention to a food is not particularly restricted, but typically the mineral-containing composition of the invention will first be added to cooking water. When the food is noodles, for example, the mineral-containing composition of the invention may be added to water for boiling noodles. When the food is rice, the mineral-containing composition of the invention may be added to water for cooking rice. When the food is soup, the mineral-containing composition of the invention may be added to water that is to constitute the soup water. Enhanced flavor is typically produced by increasing umami and/or umami richness. The term "umami" is one of the five basic tastes, being produced by umami components which include glutamic acid and aspartic acid as major amino acids, or the nucleotides (nucleic acid constituents) inosinic acid, guanylic acid and xanthylic acid, as well as other organic acids such as succinic acid and salts thereof, while "umami richness" is umami aftertaste, as a persistent rich taste from an umami substance. These flavors can be objectively evaluated by digitization using a taste sensor such as a TS-5000Z taste sensing device (Intelligent Sensor Technology, Inc.).

By boiling noodles with water (preferably purified water) that includes a mineral-containing composition of the invention, it is possible to improve noodle firmness and/or glossiness. The "firmness" is a soft yet tensed condition (or degree of elongation), and it refers to the elasticity perceived when a noodle is chewed, or the "chewiness". The "glossiness" of a noodle is the apparent gloss on the noodle surface.

When the food is a soup, noodles, rice, or a combination thereof, the mineral-containing composition of the invention may be prepared so that the potassium ion concentration (potassium concentration (ppm)/dilution factor in the mineral-containing composition) added to the cooking water (for example, water for boiling noodles, water for cooking rice or water to be used as soup water) is 50 to 300 ppm, 50 to 290 ppm, 50 to 280 ppm, 50 to 270 ppm, 50 to 260 ppm, 50 to 250 ppm, 50 to 240 ppm, 50 to 230 ppm, 50 to 220 ppm, 50 to 210 ppm, 50 to 200 ppm, 50 to 190 ppm, 50 to 180 ppm, 50 to 170 ppm, 50 to 160 ppm, 50 to 150 ppm, 50 to 140 ppm, 50 to 130 ppm, 50 to 120 ppm, 50 to 110 ppm, 50 to 100 ppm, 50 to 90 ppm, 50 to 80 ppm, 50 to 70 ppm, 50 to 60 ppm, 60 to 300 ppm, 60 to 290 ppm, 60 to 280 ppm, 60 to 270 ppm, 60 to 260 ppm, 60 to 250 ppm, 60 to 240 ppm, 60 to 230 ppm, 60 to 220 ppm, 60 to 210 ppm, 60 to 200 ppm, 60 to 190 ppm, 60 to 180 ppm, 60 to 170 ppm, 60 to 160 ppm, 60 to 150 ppm, 60 to 140 ppm, 60 to 130 ppm, 60 to 120 ppm, 60 to 110 ppm, 60 to 100 ppm, 60 to 90 ppm, 60 to 80 ppm, 60 to 70 ppm, 70 to 300 ppm, 70 to 290 ppm, 70 to 280 ppm, 70 to 270 ppm, 70 to 260 ppm, 70 to 250 ppm, 70 to 240 ppm, 70 to 230 ppm, 70 to 220 ppm, 70 to 210 ppm, 70 to 200 ppm, 70 to 190 ppm, 70 to 180 ppm, 70 to 170 ppm, 70 to 160 ppm, 70 to 150 ppm, 70 to 140 ppm, 70 to 130 ppm, 70 to 120 ppm, 70 to 110 ppm, 70 to 100 ppm, 70 to 90 ppm, 70 to 80 ppm, 80 to 300 ppm, 80 to 290 ppm, 80 to 280 ppm, 80 to 270 ppm, 80 to 260 ppm, 80 to 250 ppm, 80 to 240 ppm, 80 to 230 ppm, 80 to 220 ppm, 80 to 210 ppm, 80 to 200 ppm, 80 to 190 ppm, 80 to 180 ppm, 80 to 170 ppm, 80 to 160 ppm, 80 to 150 ppm, 80 to 140 ppm, 80 to 130 ppm, 80 to 120 ppm, 80 to 110 ppm, 80 to 100 ppm, 80 to 90 ppm, 90 to 300 ppm, 90 to 290 ppm, 90 to 280 ppm, 90 to 270 ppm, 90 to 260 ppm, 90 to 250 ppm, 90 to 240 ppm, 90 to 230 ppm, 90 to 220 ppm, 90 to 210 ppm, 90 to 200 ppm, 90 to 190 ppm, 90 to 180 ppm, 90 to 170 ppm, 90 to 160 ppm, 90 to 150 ppm, 90 to 140 ppm, 90 to 130 ppm, 90 to 120 ppm, 90 to 110 ppm, 90 to 100 ppm, 100 to 300 ppm, 100 to 290 ppm, 100 to 280 ppm, 100 to 270 ppm, 100 to 260 ppm, 100 to 250 ppm, 100 to 240 ppm, 100 to 230 ppm, 100 to 220 ppm, 100 to 210 ppm, 100 to 200 ppm, 100 to 190 ppm, 100 to 180 ppm, 100 to 170 ppm, 100 to 160 ppm, 100 to 150 ppm, 100 to 140 ppm, 100 to 130 ppm, 100 to 120 ppm, 100 to 110 ppm, 110 to 300 ppm, 110 to 290 ppm, 110 to 280 ppm, 110 to 270 ppm, 110 to 260 ppm, 110 to 250 ppm, 110 to 240 ppm, 110 to 230 ppm, 110 to 220 ppm, 110 to 210 ppm, 110 to 200 ppm, 110 to 190 ppm, 110 to 180 ppm, 110 to 170 ppm, 110 to 160 ppm, 110 to 150 ppm, 110 to 140 ppm, 110 to 130 ppm, 110 to 120 ppm, 120 to 300 ppm, 120 to 290 ppm, 120 to 280 ppm, 120 to 270 ppm, 120 to 260 ppm, 120 to 250 ppm, 120 to 240 ppm, 120 to 230 ppm, 120 to 220 ppm, 120 to 210 ppm, 120 to 200 ppm, 120 to 190 ppm, 120 to 180 ppm, 120 to 170 ppm, 120 to 160 ppm, 120 to 150 ppm, 120 to 140 ppm, 120 to 130 ppm, 130 to 260 ppm, 130 to 250 ppm, 130 to 240 ppm, 130 to 230 ppm, 130 to 220 ppm, 130 to 210 ppm, 130 to 200 ppm, 130 to 190 ppm, 130 to 180 ppm, 130 to 170 ppm, 130 to 160 ppm, 130 to 150 ppm, 130 to 140 ppm, 140 to 300 ppm, 140 to 290 ppm, 140 to 280 ppm, 140 to 270 ppm, 140 to 260 ppm, 140 to 250 ppm, 140 to 240 ppm, 140 to 230 ppm, 140 to 220 ppm, 140 to 210 ppm, 140 to 200 ppm, 140 to 190 ppm, 140 to 180 ppm, 140 to 170 ppm, 140 to 160 ppm, 140 to 150 ppm, 150 to 300 ppm, 150 to 290 ppm, 150 to 280 ppm, 150 to 270 ppm, 150 to 260 ppm, 150 to 250 ppm, 150 to 240 ppm, 150 to 230 ppm, 150 to 220 ppm, 150 to 210 ppm, 150 to 200 ppm, 150 to 190 ppm, 150 to 180 ppm, 150 to 170 ppm, 150 to 160 ppm, 160 to 300 ppm, 160 to 290 ppm, 160 to 280 ppm, 160 to 270 ppm, 160 to 260 ppm, 160 to 250 ppm, 160 to 240 ppm, 160 to 230 ppm, 160 to 220 ppm, 160 to 210 ppm, 160 to 200 ppm, 160 to 190 ppm, 160 to 180 ppm, 160 to 170 ppm, 170 to 300 ppm, 170 to 290 ppm, 170 to 280 ppm, 170 to 270 ppm, 170 to 260 ppm, 170 to 250 ppm, 170 to 240 ppm, 170 to 230 ppm, 170 to 220 ppm, 170 to 210 ppm, 170 to 200 ppm, 170 to 190 ppm, 170 to 180 ppm, 180 to 300 ppm, 180 to 290 ppm, 1680 to 280 ppm, 180 to 270 ppm, 180 to 260 ppm, 180 to 250 ppm, 180 to 240 ppm, 180 to 230 ppm, 180 to 220 ppm, 180 to 210 ppm, 180 to 200 ppm, 180 to 190 ppm, 190 to 300 ppm, 190 to 290 ppm, 190 to 280 ppm, 190 to 270 ppm, 190 to 260 ppm, 190 to 250 ppm, 190 to 240 ppm, 190 to 230 ppm, 190 to 220 ppm, 190 to 210 ppm, 190 to 200 ppm, 200 to 300 ppm, 200 to 290 ppm, 200 to 280 ppm, 200 to 270 ppm, 200 to 260 ppm, 200 to 250 ppm, 200 to 240 ppm, 200 to 230 ppm, 200 to 220 ppm, 200 to 210 ppm, 210 to 300 ppm, 210 to 290 ppm, 210 to 280 ppm, 210 to 270 ppm, 210 to 260 ppm, 210 to 250 ppm, 210 to 240 ppm, 210 to 230 ppm, 210 to 220 ppm, 220 to 300 ppm, 220 to 290 ppm, 220 to 280 ppm, 220 to 270 ppm, 220 to 260 ppm, 220 to 250 ppm, 220 to 240 ppm, 220 to 230 ppm, 230 to 300 ppm, 230 to 290 ppm, 230 to 280 ppm, 230 to 270 ppm, 230 to 260 ppm, 230 to 250 ppm, 230 to 240 ppm, 240 to 300 ppm, 240 to 290 ppm, 240 to 280 ppm, 240 to 270 ppm, 240 to 260 ppm, 240 to 250 ppm, 250 to 300 ppm, 250 to 290 ppm, 250 to 280 ppm, 250 to 270 ppm, 250 to 260 ppm, 260 to 300 ppm, 260 to 290 ppm, 260 to 280 ppm, 260 to 270 ppm, 270 to 300 ppm, 270 to 290 ppm, 270 to 280 ppm, 280 to 300 ppm, 280 to 290 ppm or 290 to 300 ppm, for example.

When the soup is miso soup, the miso soup obtained after addition of the mineral-containing composition has a pH of preferably 5.7 to 7.1, 5.7 to 7.0, 5.7 to 6.9, 5.7 to 6.8, 5.7 to 6.7, 5.7 to 6.6, 5.7 to 6.5, 5.7 to 6.4, 5.7 to 6.3, 5.7 to 6.2, 5.7 to 6.1, 5.7 to 6.0, 5.7 to 5.9, 5.7 to 5.8, 5.8 to 7.1, 5.8 to 7.0, 5.8 to 6.9, 5.8 to 6.8, 5.8 to 6.7, 5.8 to 6.6, 5.8 to 6.5, 5.8 to 6.4, 5.8 to 6.3, 5.8 to 6.2, 5.8 to 6.1, 5.8 to 6.0, 5.8 to 5.9,5.9 to 7.1, 5.9 to 7.0, 5.9 to 6.9, 5.9 to 6.8, 5.9 to 6.7, 5.9 to 6.6, 5.9 to 6.5, 5.9 to 6.4, 5.9 to 6.3, 5.9 to 6.2, 5.9 to 6.1, 5.9 to 6.0, 6.0 to 7.1, 6.0 to 7.0, 6.0 to 6.9, 6.0 to 6.8, 6.0 to 6.7, 6.0 to 6.6, 6.0 to 6.5, 6.0 to 6.4, 6.0 to 6.3, 6.0 to 6.2, 6.0 to 6.1, 6.1 to 7.1, 6.1 to 7.0, 6.1 to 6.9, 6.1 to 6.8, 6.1 to 6.7, 6.1 to 6.6, 6.1 to 6.5, 6.1 to 6.4, 6.1 to 6.3, 6.1 to 6.2, 6.2 to 7.1, 6.2 to 7.0, 6.2 to 6.9, 6.2 to 6.8, 6.2 to 6.7, 6.2 to 6.6, 6.2 to 6.5, 6.2 to 6.4, 6.2 to 6.3, 6.3 to 7.1, 6.3 to 7.0, 6.3 to 6.9, 6.3 to 6.8, 6.3 to 6.7, 6.3 to 6.6, 6.3 to 6.5, 6.3 to 6.4, 6.4 to 7.1, 6.4 to 7.0, 6.4 to 6.9, 6.4 to 6.8, 6.4 to 6.7, 6.4 to 6.6, 6.4 to 6.5, 6.5 to 7.1, 6.5 to 7.0, 6.5 to 6.9, 6.5 to 6.8, 6.5 to 6.7, 6.5 to 6.6, 6.6 to 7.1, 6.6 to 7.0, 6.6 to 6.9, 6.6 to 6.8, 6.6 to 6.7, 6.7 to 7.1, 6.7 to 7.0, 6.7 to 6.9, 6.7 to 6.8, 6.8 to 7.1, 6.8 to 7.0, 6.8 to 6.9, 6.9 to 7.1, 6.9 to 7.0 or 7.0 to 7.1, for example.

The present invention allows convenient production of a food with enhanced flavor (especially increased umami and/or umami richness), and a food with enhanced noodle firmness and/or glossiness.

The present invention will now be explained in greater detail by the following Examples. It is to be understood, however, that the invention is not restricted in any way to the Examples, and various modifications thereof may be implemented.

### EXAMPLES

### <Example 1: Preparation of mineral extract from coconut shell activated carbon>

After adding 30 g of coconut shell activated carbon ("Taiko CW type", unwashed, product of Futamura Chemical Co., Ltd.) and 400 g of distilled water heated to 90°C into a 1 L Erlenmeyer flask, the mixture was stirred with a stirrer at 100 rpm for 15 minutes while heating at 90°C. The obtained suspension was suction filtered with a polyester 500 mesh (25 µm), and the resulting filtrate was centrifuged at 3000 rpm for 10 minutes. The centrifuged supernatant was suction filtered with filter paper to obtain a mineral extract.

### <Example 2: Comparison of activated carbons>

A mineral extract was prepared by the same method as Example 1, except that the coconut shell activated carbon was changed to KURARAYCOAL^{R} GG (unwashed, Kuraray Co., Ltd.).

### <Examples 3 to 6: Comparison of extraction times>

Mineral extracts were prepared by the same method as Example 1, except that the extraction time was changed to 10, 20, 40 or 80 minutes.

### <Examples 7 to 9: Comparison of distilled water amounts and extraction times>

Mineral extracts were prepared by the same method as Example 1, except that the amount of distilled water was changed 130, 200 or 400 g, and the extraction time was changed to 5 minutes.

### <Examples 10 to 12: Comparison of extraction temperatures and extraction times>

Mineral extracts were prepared by the same method as Example 1, except that the extraction temperature was changed to 30, 60 or 90°C and the extraction time was changed to 5 minutes.

The mineral extracts prepared in Examples 1 to 12 were analyzed by the following methods.

### <ICP analysis of metals>

ICP emission spectrometer: An iCAP6500Duo (Thermo Fisher Scientific) was used. The ICP General-Purpose Mixture XSTC-622B was diluted and 4 calibration curves were generated for 0, 0.1, 0.5 and 1.0 mg/L. Each sample was diluted with dilute nitric acid to fit in the calibration curve range, and ICP measurement was performed.

### <IC analysis of Cl⁻ and SO₄²⁻>

Ion chromatograph system: An ICS-5000K (Japan Dionex Corp.) was used. The columns used were Dionex Ion Pac AG20 and Dionex Ion Pac AS20. The eluent used was a potassium hydroxide aqueous solution at 5 mmol/L for 0 to 11 min, 13 mmol/L for 13 to 18 min and 45 mmol/L for 20 to 30 min, and elution was performed with a flow rate of 0.25 mL/min. Anion Mixed Standard Solution 1 (containing 7 ion species including 20 mg/L Cl⁻ and 100 mg/L SO₄²⁻, FujiFilm-Wako) was diluted, and 5 calibration curves were generated each for 0, 0.1, 0.2, 0.4 and 1.0 mg/L (Cl⁻) and 0, 0.5, 1.0, 2.0 and 5.0 mg/L (SO₄²⁻). Each sample was diluted to fit in the calibration curve range, and 25 µL was injected for IC measurement.

The results are shown in the following table.

**[Table 1]**

| Mineral concentration [mg/kg]: Numerals under minerals indicate lower quantification limits | | | | | | | | | | | | | | | | | |
|---|---|---|---|---|---|---|---|---|---|---|---|---|---|---|---|---|---|
| Example | Activated carbon | Extract Temperature | | | Stirring | | Concentrated | pH | Na | K | Ca | Mg | Zn | Fe | Si | Cl | SO₄²⁻ |
| | Type | [g] | [g] | [°C] | [rpm] | [min] | | | 0.01 | 0.1 | 0.001 | 0.001 | 0.001 | 0.001 | 0.01 | 0.05 | 0.03 |
| 1 | Taiko CW type | 30 | 400 | 90 | 100 | 15 | No | 9.46 | 62.59 | 390.7 | 0.454 | 0.175 | 0.000 | 0.066 | 15.59 | 88.87 | 14.97 |
| 2 | KURARAYCOAL^{R} GG | 30 | 400 | 90 | 100 | 15 | No | 9.81 | 69.60 | 474.5 | 0.699 | 0.347 | 0.000 | 0.080 | 17.43 | 0.70 | 1.74 |
| 3 | Taiko CW type | 30 | 130 | 90 | 100 | 10 | No | 9.15 | 133.30 | 1008.0 | 0.222 | 0.212 | 0.002 | 0.070 | 44.83 | 106.9 | 8.38 |
| 4 | Taiko CW type | 30 | 130 | 90 | 100 | 20 | No | 9.04 | 138.30 | 1012.0 | 0.189 | 0.181 | 0.002 | 0.079 | 51.42 | 266.6 | 9.01 |
| 5 | Taiko CW type | 30 | 130 | 90 | 100 | 40 | No | 9.09 | 139.20 | 997.0 | 0.293 | 0.201 | 0.001 | 0.106 | 57.74 | 278.4 | 9.34 |
| 6 | Taiko CW type | 30 | 130 | 90 | 100 | 80 | No | 9.29 | 131.80 | 948.0 | 0.223 | 0.314 | 0.003 | 0.133 | 65.90 | 292.2 | 9.23 |
| 7 | Taiko CW type | 30 | 400 | 90 | 100 | 5 | No | 10.61 | 43.18 | 292.0 | 0.524 | 0.678 | 0.015 | 0.247 | 12.62 | 87.1 | 3.59 |
| 8 | Taiko CW type | 30 | 200 | 90 | 100 | 5 | No | 10.43 | 95.90 | 671.4 | 0.976 | 0.520 | 0.015 | 0.213 | 22.69 | 174.2 | 5.35 |
| 9 | Taiko CW type | 30 | 130 | 90 | 100 | 5 | No | 10.32 | 115.6 | 870.0 | 0.908 | 0.675 | 0.021 | 0.343 | 39.42 | 294.1 | 9.34 |
| 10 | Taiko CW type | 30 | 400 | 90 | 100 | 5 | No | 10.52 | 47.12 | 322.0 | 0.499 | 0.606 | 0.009 | 0.335 | 14.82 | 93.9 | 3.54 |
| 11 | Taiko CW type | 30 | 400 | 60 | 100 | 5 | No | 10.56 | 51.30 | 342.2 | 0.528 | 0.232 | 0.023 | 0.111 | 8.02 | 88.2 | 3.28 |
| 12 | Taiko CW type | 30 | 400 | 30 | 100 | 5 | No | 10.12 | 44.92 | 304.0 | 0.559 | 0.165 | 0.008 | 0.054 | 3.57 | 83.2 | 2.96 |

There was no change in the characteristic of significantly high potassium concentration even with different activated carbons, extraction times, extraction amounts relative to activated carbon and extraction temperatures. Although a significant amount of chloride ion was extracted when HCl was used (data not shown), the concentrations of chloride ion were low in all of the Examples. Incidentally, no heavy metals (lead, cadmium, arsenic or mercury) were detected in any of the Examples (data not shown).

### <Example 13: Preparation of concentrate>

After adding 174 g of coconut shell activated carbon ("Taiko CW type", unwashed, product of Futamura Chemical Co., Ltd.) and 753 g of distilled water heated to 30°C into a 1 L Erlenmeyer flask, the mixture was stirred with a stirrer at 100 rpm for 5 minutes while heating at 30°C. The obtained suspension was suction filtered with a polyester 500 mesh (25 µm), and the resulting filtrate was centrifuged at 3000 rpm for 10 minutes. The centrifuged supernatant was suction filtered with filter paper to obtain a mineral extract. This was carried out twice in the same manner. The three obtained mineral extracts were combined and concentrated 62-fold with an evaporator, to obtain the mineral concentrate extracts shown below.

The mineral extract and mineral concentrate extract prepared in Example 13 were diluted 62-fold and analyzed by the method described above. The results are shown in the following table.

**[Table 2]**

| Mineral concentration [mg/kg]: Numerals under minerals indicate lower quantification limits | | | | | | | | | | | | | | | | | |
|---|---|---|---|---|---|---|---|---|---|---|---|---|---|---|---|---|---|
| Example | Activated carbon | | Extract | Temperature | Stirring | | Concentrated | pH | Na | K | Ca | Mg | Zn | Fe | Si | Cl | SO₄²⁻ |
| | Type | [g] | [g] | [°C] | [rpm] | [min] | | | 0.01 | 0.1 | 0.001 | 0.001 | 0.001 | 0.001 | 0.01 | 0.05 | 0.03 |
| 13 | Taiko CW type | 521 | 2259 | 30 | 100 | 5 | No | 9.77 | 129.4 | 958.6 | 0.232 | 0.309 | 0.003 | 0.020 | 7.50 | 245.3 | 7.41 |
| | | | | | | | Yes | 9.76 | 121.0 | 941.6 | 0.237 | 0.323 | 0.005 | 0.020 | 7.05 | 242.2 | 6.92 |

Even under concentrated conditions, there was no change in the characteristic of high potassium concentration or low sodium and chloride ion concentrations.

### <Example 14: Preparation of mineral concentrate extract from coconut shell activated carbon>

After adding 200 g of coconut shell activated carbon ("Taiko CW type", unwashed, product of Futamura Chemical Co., Ltd.) and 1500 g of distilled water heated to 90°C into a 1 L Erlenmeyer flask, the mixture was stirred with a stirrer at 100 rpm for 15 minutes while heating at 90°C. The obtained suspension was suction filtered with a polyester 500 mesh (25 µm), and the resulting filtrate was centrifuged at 3000 rpm for 10 minutes. The centrifuged supernatant was suction filtered with filter paper to obtain a mineral extract. The obtained mineral extract was concentrated 14-fold with an evaporator, to obtain the mineral concentrate extract shown below.

**[Table 3]**

| · Ion concentrations in mineral concentrate extract | |
|---|---|
| Ion component | Concentration (mg/L) |
| Na | 1,650 |
| K | 11,451 |
| Mg | 1 |
| Ca | 2 |
| Fe | 2 |
| Zn | 3 |
| Cl⁻ | 2,442 |
| SO₄²⁻ | 230 |

### <Example 15: Buffer capacity evaluation-I>

### (1) Preparation of evaluation samples

The mineral concentrate extract obtained in Example 14 was added to ultrapure water (MilliQ water) to the potassium concentrations listed below, to prepare evaluation samples.

**Table 4**

| | | | | | | | | |
|---|---|---|---|---|---|---|---|---|
| Extract amount | ml | 100 | 100 | 100 | 100 | 100 | 100 | 100 |
| Extract addition | ml | 0.076 | 0.152 | 0.303 | 0.607 | 0.758 | 1.516 | 4.549 |
| Total liquid volume | ml | 100.000 | 100.000 | 100.000 | 100.000 | 100.000 | 100.000 | 100.000 |
| K concentration | mg/L | 10 | 20 | 40 | 80 | 100 | 200 | 600 |

### (2) pH measurement

The following samples were also prepared as Comparative Examples, in addition to the extracts obtained as described above. To 100 ml of each sample there was added 1 ml of 0.1 N HCl while stirring with a stirrer, for measurement of the pH.
·KOH
· Commercially available alkali ion water (Na: 8.0 mg/l, K: 1.6 mg/l, Ca: 13 mg/l, Mg: 6.4 mg/l, pH value: 8.8 to 9.4)

The buffer capacity was determined as the ratio (B)/(A), where (A) mL was the liquid volume necessary to lower the pH from 9.2 to 3.0 by titration of 100 g of sodium hydroxide solution adjusted to pH 9.2 with 0.1 M hydrochloric acid, and (B) mL was the liquid volume necessary to lower the pH from 9.2 to 3.0 by titration of the mineral-containing water composition with 0.1 M hydrochloric acid.

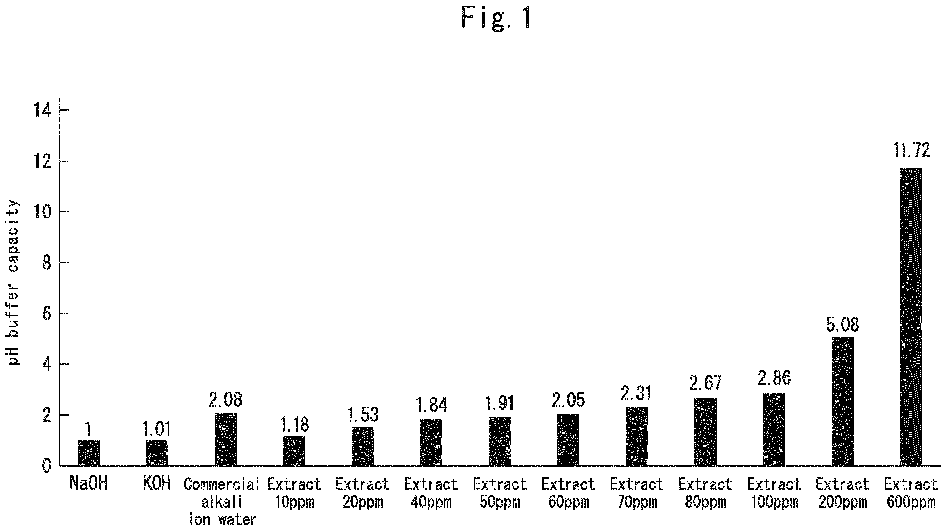

As shown in Fig. 1, the water with addition of the mineral concentrate extract derived from coconut shell activated carbon was shown to have excellent buffer capacity.

### <Example 16: Buffer capacity evaluation-II>

### (1) Preparation of comparative examples and evaluation sample

As comparative examples there were prepared purified water (tap water treated with a water purifier by Water Stand Co.) and the same commercially available alkali ion water used in Example 15. The mineral concentrate extract obtained in Example 14 was added to purified water (same as above) to a potassium concentration of 100 ppm, to prepare an evaluation sample.

### (2) pH measurement

The obtained sample was evaluated for buffer capacity in the same manner as Example 15. Specifically, to 100 ml of each sample there was added 1 ml of 0.1 N HCl while stirring with a stirrer, for measurement of the pH.

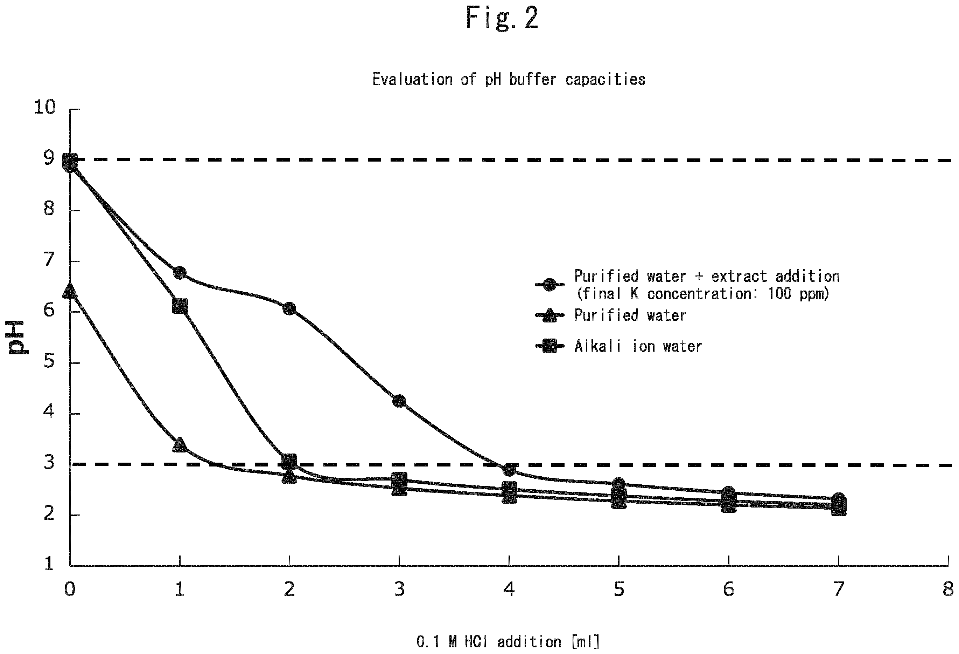

As shown in Fig. 2, the water obtained by addition of the mineral concentrate extract from coconut shell activated carbon to purified tap water was shown to have more excellent buffer capacity than the purified water or alkali ion water.

### <Example 17: Preparation of mineral concentrate extracts from coconut shell activated carbon>

### = Pilot scale =

After passing 180 L of purified water through 40 kg of coconut shell activated carbon ("Taiko", unwashed hydrochloric acid, Futamura Chemical Co., Ltd.), the obtained suspension was clarified by a mesh and centrifugal separation to obtain a mineral extract. This was concentrated 92-fold under reduced pressure using a centrifugal thin-film vacuum evaporator, and the obtained concentrate was clarified by centrifugal separation and filter paper. The concentrate was filled into 1 L vinyl pouches and heat treated at 85°C for 30 minutes to obtain mineral concentrated extracts. The potassium ion concentration, sodium ion concentration, calcium ion concentration and magnesium ion concentration of each mineral concentrated extract were analyzed by ICP emission spectroscopy, the chloride ion concentration was analyzed by ion chromatography, and the TOC was analyzed by total organic carbon measurement.

### <Example 18: Preparation of mineral concentrate extract from coconut shell activated carbon>

### = Laboratory small scale =

After combining 200 g of coconut shell activated carbon (granular Shirasagi, unwashed hydrochloric acid, Osaka Gas Chemicals Co., Ltd.) and 910 g of distilled water, the mixture was stirred with a stirrer at 100 rpm for 20 minutes while heating at 30°C. The obtained suspension was suction filtered with filter paper (ADVANTEC quantitative filter paper No. 5C, ϕ55 mm, by Toyo Roshi Co., Ltd.), and the resulting filtrate was further suction filtered with filter paper (Merck Omnipore PTFE Membrane, 5.0 µm, ϕ47 mm) to obtain a mineral extract. This was repeated several times until a sufficient amount of mineral extract was obtained, and after mixing the entire mineral extract, a rotary evaporator was used for 50-fold concentration under reduced pressure and the resulting concentrate was filtered with filter paper (ADVANTEC 25ASO20AN by Toyo Roshi Co., Ltd., 0.2 µm) to obtain a mineral concentrate extract. Hydrochloric acid was added to the mineral concentrate to adjust the pH to approximately 9.5, and 10 mL of the mixture was dispensed into a vial and stored by refrigeration for 2 days. After subsequent cold filtration with filter paper (ADVANTEC 25ASO20AN by Toyo Roshi Co., Ltd., 0.2 µm), the concentrate was heat treated at 80°C for 30 minutes to obtain a mineral concentrated extract. The potassium ion concentration, sodium ion concentration, calcium ion concentration and magnesium ion concentration of the obtained mineral concentrated extract were analyzed by high-frequency inductively coupled plasma emission spectroscopy (ICP-AES), and the chloride ion concentration and sulfate ion concentration were analyzed by ion chromatography (IC).

### <Example 19: Preparation of mineral concentrate extract from coconut shell activated carbon>

### = Laboratory large scale =

After combining 800 g of coconut shell activated carbon (granular Shirasagi, unwashed hydrochloric acid, Osaka Gas Chemicals Co., Ltd.) and 3660 g of distilled water, the mixture was stirred for 15 minutes while heating at 30°C. The obtained suspension was suction filtered with filter paper (ADVANTEC A080A090C by Toyo Roshi Co., Ltd.) to obtain a mineral extract. This was repeated several times until a sufficient amount of mineral extract was obtained, and after mixing the entire mineral extract, a rotary evaporator was used for 60-fold concentration under reduced pressure and the resulting concentrate was filtered with filter paper (ADVANTEC A080A090C by Toyo Roshi Co., Ltd.) to obtain a mineral concentrate extract. The extract was dispensed at 10 mL into a vial and stored by refrigeration for 2 days. It was then subjected to cold filtration with filter paper (ADVANTEC A080A090C by Toyo Roshi Co., Ltd.). Hydrochloric acid was added to adjust the pH to approximately 9.5, and purified water was used for dilution to adjust the potassium ion concentration to about 100,000 ppm. The mixture was heat treated at 80°C for 30 minutes to obtain a mineral concentrated extract. The potassium ion concentration, sodium ion concentration, calcium ion concentration, magnesium ion concentration and sulfate ion concentration of the obtained mineral concentrated extract were analyzed by ion chromatography (IC), the chloride ion concentration was analyzed by ion chromatography, and the TOC was analyzed by total organic carbon measurement.

### <Example 20: Preparation of mineral concentrate extract from coconut shell activated carbon>

### = Pilot scale =

After placing 360 kg of coconut shell activated carbon (granular Shirasagi, unwashed, Osaka Gas Chemicals Co., Ltd.) and 1620 kg of purified water at 35°C in a 2500 L conical tank, the mixture was stirred for 15 minutes and the obtained suspension was clarified by a vibrating sieve, centrifugal separation and filter paper filtration to obtain a mineral extract. After 60-fold concentration under reduced pressure using a centrifugal thin-film vacuum evaporator, the obtained concentrate was filtered with filter paper to obtain a mineral concentrate extract. The extract was filled into a drum and stored by refrigeration for 2 days, and then subjected to cold filtration with filter paper. Hydrochloric acid was added to adjust the pH to approximately 9.5, and purified water was used for dilution to adjust the potassium ion concentration to about 100,000 ppm. The mixture was heat treated at 130°C for 30 seconds to obtain a mineral concentrated extract. The potassium ion concentration, sodium ion concentration, calcium ion concentration, magnesium ion concentration and sulfate ion concentration of the obtained mineral concentrated extract were analyzed by ion chromatography (IC), the chloride ion concentration was analyzed by ion chromatography, and the TOC was analyzed by combustion oxidation-infrared ray TOC analysis.

The results for Examples 17 to 20 are shown in Table 5. Regarding the components of each mineral extract, the mineral extract obtained in Example 17 had a potassium concentration of 60,994 ppm, a chloride ion concentration of 3030 ppm and a pH of 11.1, the mineral extract obtained in Example 18 had a potassium concentration of 87,500 ppm, a chloride ion concentration of 32,890 ppm and a pH of 9.50, the mineral extract obtained in Example 19 had a potassium concentration of 100,000 ppm, a chloride ion concentration of 13,132 ppm and a pH of 9.51, and the mineral extract of Example 20 had a potassium concentration of 111,747 ppm, a chloride ion concentration of 8545 ppm and a pH of 9.48.

**[Table 5]**

| | pH before adjustment | pH after adjustment | Na (ppm) | K (ppm) | Ca (ppm) | Mg (ppm) | Cl (ppm) | SO₄ (ppm) | TOC (ppm) |
|---|---|---|---|---|---|---|---|---|---|
| Example 17 | 11.1 | | 5,627 | 60,994 | 20 | 5 | 3,030 | Un-measured | 186 |
| Example 18 | 9.95 | 9.5 | 7,100 | 87,500 | 830 | 44 | 32,890 | 1,481 | Un-measured |
| Example 19 | 9.86 | 9.51 | 9,000 | 100,000 | 190 | 185 | 13,132 | 90 | 210 |
| Example 20 | 9.58 | 9.48 | 9,531 | 111,747 | 99 | 66 | 8,545 | 0 | 140 |

### <Example 21: Organoleptic evaluation of miso soups>

In a commercially available instant low-salt miso soup tube (Markome Co., Ltd.), boiled ultrapure water (Milli-Q Ultrapure Water System) was prepared and mineral concentrate extract obtained in the same manner as Example 20 (potassium concentration: 88,000 ppm) was added to specified potassium concentrations in the water (50 ppm, 100 ppm, 300 ppm, 500 ppm and 1000 ppm) to prepare 160 ml each of different miso soups, which were organoleptically evaluated.

The organoleptic evaluation was conducted by 5 trained panelists, with the same evaluation criteria established beforehand for all of the panelists. A control without addition of extract was used for each evaluation, with each panelist evaluating each parameter (salt flavor, umami, mellowness, aroma and deliciousness) on the following 10-level evaluation score (1 point = hardly perceived, 5 points = control score; 10 points = strongly perceived), and calculating the average score for each.

Miso soup was prepared using the same type of commercially available instant low-salt miso soup tube (Markome Co., Ltd.) as above, adding commercially available potassium chloride (product of Tomita Pharmaceutical Co., Ltd.) to specified potassium concentrations in the water (50 ppm, 100 ppm, 300 ppm, 500 ppm and 1000 ppm) to prepare 160 ml each of different miso soups, which were organoleptically evaluated in comparison with the mineral concentrate extracts. The method of organoleptic evaluation was the same as for the mineral concentrate extracts.

**[Table 6]**

| | K concentration (ppm) | | 0 | 50 | 100 | 300 | 500 | 1000 |
|---|---|---|---|---|---|---|---|---|
| Extract | Salty taste | Average | 5 | 4.8 | 4.8 | 4.6 | 4.8 | 5 |
| | Umami | | 5 | 5.6 | 6.2 | 6.2 | 6.2 | 6.4 |
| | Mellowness | | 5 | 5 | 5.2 | 5.4 | 5.4 | 5.2 |
| | Aroma | | 5 | 5.2 | 5.8 | 5.8 | 5.6 | 5.2 |
| | Deliciousness | | 5 | 5.4 | 6.2 | 6 | 4.6 | 3.8 |
| | pH | | 5.54 | 5.72 | 6.17 | 7.06 | 7.37 | 7.64 |
| KCl | Salty taste | Average | 5 | 5.2 | 5.2 | 5.2 | 5.4 | 5.4 |
| | Umami | | 5 | 5 | 5.2 | 5.6 | 6 | 6 |
| | Mellowness | | 5 | 4.8 | 4.8 | 4.6 | 4.6 | 4.8 |
| | Aroma | | 5 | 5 | 5 | 5.2 | 5.2 | 4.8 |
| | Deliciousness | | 5 | 5 | 5 | 5 | 4.6 | 4.4 |
| | pH | | 5.54 | 5.57 | 5.58 | 5.56 | 5.55 | 5.58 |

When a mineral concentrate extract was added there was a maximum point for the evaluation score for added potassium concentration, with the peak at an added potassium concentration of 100 ppm, and significant improvement in flavor of the miso soup across an added potassium concentration range of 50 ppm to 300 ppm. Even with potassium chloride addition, however, the evaluation score was virtually unchanged up to a potassium concentration of 300 ppm, with even a slight decrease in evaluation score at higher potassium concentration.

It is thought that addition of a weakly alkaline mineral concentrate extract to miso soup altered factors such as the potassium concentration, mineral balance and pH of the miso soup, thereby enhancing the umami and aroma of the miso soup.

### <Example 22: Taste sensor analysis of miso soups>

In commercially available instant low-salt and non-low-salt normal miso soup tubes (Markome Co., Ltd.), boiled ultrapure water (Milli-Q Ultrapure Water System) was prepared and mineral concentrate extract obtained in the same manner as Example 20 (potassium concentration: 88,000 ppm) or commercially available potassium chloride (Tomita Pharmaceutical Co., Ltd.) as a control, was added to specified potassium concentrations in the water (100 ppm and 300 ppm) to prepare 160 ml each of different miso soup sample solutions.

Each prepared miso soup sample solution was analyzed for flavor using a TS-5000Z taste sensing device (Intelligent Sensor Technology, Inc.). This taste sensing device is provided with a taste sensor having a lipid membrane modeling the human tongue, and can objectively evaluate different tastes by converting them to numerical data.

In the analysis, the difference in potential between each miso soup sample solution and a reference solution (30 nM KCl, 0.3 mM tartaric acid) was defined as the initial taste at the moment of contact with the mouth, while the difference between the potential of the reference solution and the potential upon performing measurement again after gently washing the sensor with the reference solution and soaking in the reference solution, was defined as the persistent aftertaste. The initial taste was evaluated in terms of "bitter mixed", "hard astringent", "umami" and "salty", while the aftertaste was evaluated in terms of "bitter", "astringent" and "umami richness". The "acid taste" was also measured for initial taste, but was excluded from the evaluation as it was not detectable.

The evaluation of each taste was carried out by calculating a value for each miso soup sample (both the low-salt and normal miso soup), relative to 0 as the value for the sample without potassium.

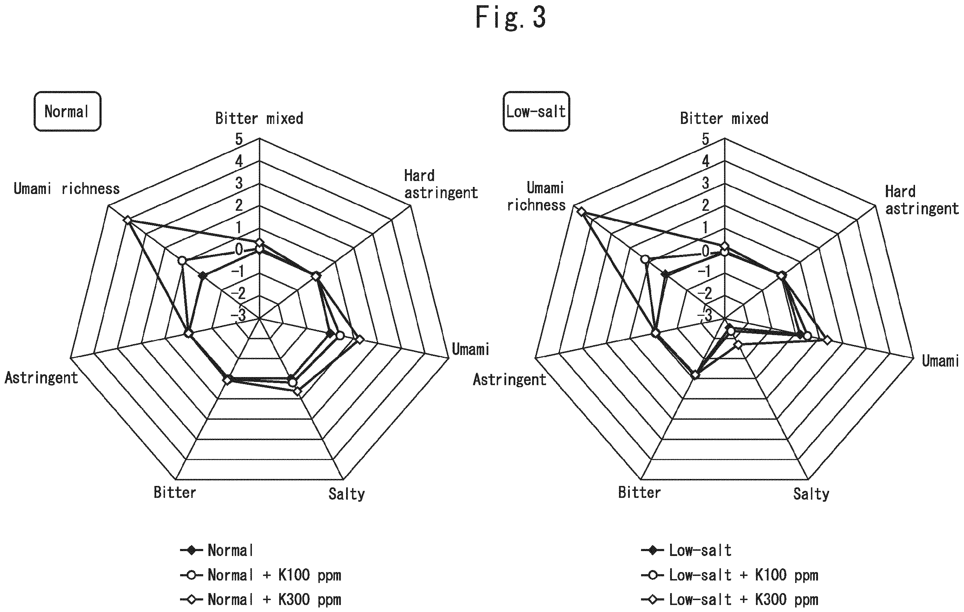

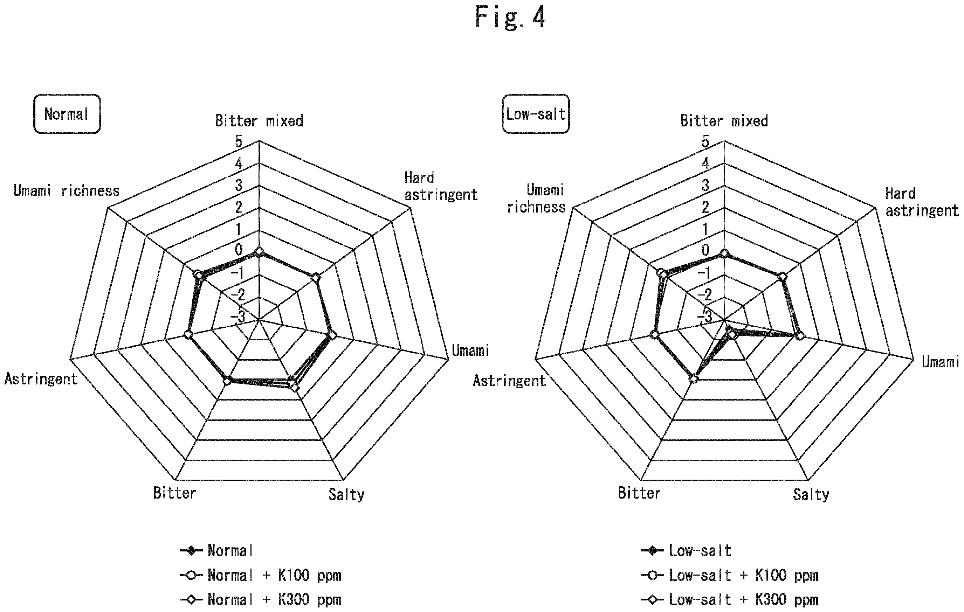

As shown in Fig. 3, addition of a mineral concentrate extract significantly increased the values of "umami" and "umami richness" (umami aftertaste) for both the normal miso soup and the low-salt miso soup. Also, as shown in Fig. 4, addition of potassium chloride tended to slightly increase the value for "salty taste" without increasing the values for "umami" and "umami richness".

### <Example 23: Organoleptic evaluation of cup ramen>

Boiled purified water was prepared for commercially available instant cup noodles (material name: Fried Noodles, 3 min with 300 ml hot water) and added up to the measuring mark in the container (approximately 300 ml). Mineral concentrate extract obtained in the same manner as Example 20 (potassium concentration: 70,000 ppm) was added to purified water to a specified potassium concentration (60 ppm), and a sample was also prepared in the same manner and organoleptically evaluated.

The organoleptic evaluation was conducted by 4 trained panelists, with the same evaluation criteria established beforehand for all of the panelists. A control without addition of extract was used in the evaluation, with each panelist evaluating each parameter (noodle firmness, soup umami, soup saltiness, soup thickness and overall flavor) in 0.5 point increments on the following 10-level evaluation score (1 point = hardly perceived, 5 points = control score; 10 points = strongly perceived), and calculating the average score for each.

**[Table 7]**

| | Without extract | Extract added |
|---|---|---|
| Noodle firmness | 5 | 6.75 |
| Soup umami | 5 | 7 |
| Soup saltiness | 5 | 5.25 |
| Soup thickness | 5 | 6 |
| Overall flavor (soup + noodles) | 5 | 5.75 |

Addition of a mineral concentrate extract was confirmed to increase the scores for all of the parameters.

### <Example 24: Organoleptic evaluation of onion consomme soup>

Boiled purified water was prepared in an amount for one small bag portion of commercially available instant soup (name: Dry Soup (consomme), material name: onion extract), using 150 ml as the prescribed amount for preparation. Mineral concentrate extract obtained in the same manner as Example 20 (potassium concentration: 70,000 ppm) was added to purified water to a specified potassium concentration (60 ppm), and a sample was also prepared in the same manner and organoleptically evaluated.

The organoleptic evaluation was conducted by 4 trained panelists, with the same evaluation criteria established beforehand for all of the panelists. A control without addition of extract was used in the evaluation, with each panelist evaluating each parameter (umami, salty taste, aroma, richness and sweetness) in 0.5 point increments on the following 10-level evaluation score (1 point = hardly perceived, 5 points = control score; 10 points = strongly perceived), and calculating the average score for each.

**Table 8**

| | Without extract | Extract added |
|---|---|---|
| Umami | 5 | 5.75 |
| Salty taste | 5 | 5 |
| Aroma | 5 | 5.5 |
| Richness | 5 | 5.375 |
| Sweetness | 5 | 5.5 |

Addition of a mineral concentrate extract was confirmed to enhance umami, aroma, richness and sweetness.

### <Example 25: Organoleptic evaluation of corn cream soup>

Boiled purified water was prepared in an amount for one small bag portion of commercially available instant soup (name: Dry Soup (potage), material name: sweet corn), using 150 ml as the prescribed amount for preparation. Mineral concentrate extract obtained in the same manner as Example 20 (potassium concentration: 70,000 ppm) was added to purified water to a specified potassium concentration (60 ppm), and a sample was also prepared in the same manner and organoleptically evaluated.

The organoleptic evaluation was conducted by 4 trained panelists, with the same evaluation criteria established beforehand for all of the panelists. A control without addition of extract was used in the evaluation, with each panelist evaluating each parameter (umami, salty taste, aroma, richness and sweetness) in 0.5 point increments on the following 10-level evaluation score (1 point = hardly perceived, 5 points = control score; 10 points = strongly perceived), and calculating the average score for each.

**Table 9]**

| | Without extract | Extract added |
|---|---|---|
| Umami | 5 | 5 |
| Salty taste | 5 | 4.875 |
| Aroma | 5 | 5.375 |
| Richness | 5 | 5.125 |
| Sweetness | 5 | 5.125 |

Addition of a mineral concentrate extract was found to slightly reduce the salty taste and to enhance the aroma, richness and sweetness.

### <Example 26: Organoleptic evaluation of pasta>

Purified water in an amount of 400 ml was placed in a commercially available microwave oven pasta cooking container up to the interior measuring mark, together with 100 g of commercially available dried pasta (1.6 mm thickness, product of Nisshin Seifun), and heated with the microwave oven at 500 W for 13 minutes. Boiled pasta was prepared in the same manner, except that the purified water was prepared with addition of mineral concentrate extract obtained in the same manner as Example 20 (potassium concentration: 70,000 ppm) to a specified potassium concentration (60 ppm), and was organoleptically evaluated.

The organoleptic evaluation was conducted by 4 trained panelists, with the same evaluation criteria established beforehand for all of the panelists. A control without addition of extract was used in the evaluation, with each panelist evaluating each parameter (gloss, chewiness, elasticity, original wheat flavor and taste) in 0.5 point increments on the following 10-level evaluation score (1 point = hardly perceived, 5 points = control score; 10 points = strongly perceived), and calculating the average score for each.

**Table 10**

| | Without extract | Extract added |
|---|---|---|
| Gloss | 5 | 5.25 |
| Chewiness | 5 | 5.875 |
| Elasticity | 5 | 6 |
| Wheat flavor | 5 | 5 |
| Flavor | 5 | 5 |

Addition of a mineral concentrate extract was found to enhance the gloss and firmness (chewiness and elasticity).

## Claims

1. A mineral-containing composition for a food additive, wherein potassium ion has the highest content among the metal ions present in the mineral-containing composition, and the chloride ion content of the mineral-containing composition is not more than 50% of the potassium ion content.

2. The mineral-containing composition according to claim 1, wherein the mineral-containing composition has a pH of 7.5 to 10.5.

3. The mineral-containing composition according to claim 1, wherein the food is soup, noodles, rice, or a combination thereof.

4. The mineral-containing composition according to claim 3, wherein the food is a low-salt type.

5. The mineral-containing composition according to claim 3, wherein the soup is miso soup, pork soup, consomme soup, corn soup, onion soup, vegetable soup, egg soup or soup stock.

6. The mineral-containing composition according to claim 1, wherein the mineral-containing composition further includes calcium ion, magnesium ion, sodium ion, iron ion, zinc ion, silicon ion and/or sulfate ion.

7. The mineral-containing composition according to claim 1, wherein the calcium ion content in the mineral-containing composition is not more than 2.0% of the potassium ion content.

8. The mineral-containing composition according to claim 1, wherein the magnesium ion content in the mineral-containing composition is not more than 1.0% of the potassium ion content.

9. The mineral-containing composition according to claim 1, wherein the sodium content in the mineral-containing composition is 5 to 45% of the potassium ion content.

10. The mineral-containing composition according to claim 1, wherein the mineral-containing composition includes an activated carbon extract of a plant-derived starting material.

11. The mineral-containing composition according to claim 10, wherein the plant-derived starting material is selected from among hulls of coconut, palm, almond, walnut or plum; wood materials selected from among sawdust, charcoal, resin and lignin; fly ash; bamboo; food residues selected from among bagasse, rice husk, coffee bean and molasses; and combinations of the foregoing.

12. The mineral-containing composition according to any one of claims 1 to 11, which is to be used for enhancing food flavor.

13. The mineral-containing composition according to any one of claims 1 to 11, which is to be used for increasing umami and/or umami richness.

14. The mineral-containing composition according to claim 13, wherein the umami and/or umami richness is evaluated using a taste sensor.

15. The mineral-containing composition according to any one of claims 1 to 11, which is to be used for improving noodle firmness and/or glossiness.

16. A method for producing a food with enhanced flavor, which includes a step of adding a mineral-containing composition according to any one of claims 1 to 11 to a food whose flavor is to be enhanced.

17. A method for producing a food with increased umami and/or umami richness, which includes a step of adding a mineral-containing composition according to any one of claims 1 to 11 to a food whose umami and/or umami richness is to be increased.

18. The method according to claim 17, wherein the umami and/or umami richness is evaluated using a taste sensor.

19. The method according to claim 16 or 17, wherein the food is soup, noodles, rice, or a combination thereof, and the mineral-containing composition is added to an added potassium ion concentration of 50 ppm to 300 ppm.

20. The method according to claim 19, wherein when the soup is miso soup, and the miso soup has a pH of 5.7 to 7.1 after the mineral-containing composition has been added.

21. A method for producing a food with enhanced noodle firmness and/or glossiness, which includes a step of boiling noodles whose firmness and/or glossiness is to be enhanced, in water to which a mineral-containing composition according to any one of claims 1 to 11 has been added.

22. A food with enhanced flavor, which includes a mineral-containing composition according to any one of claims 1 to 11.

23. A food with increased umami and/or umami richness, which includes a mineral-containing composition according to any one of claims 1 to 11.

24. The food according to claim 23, wherein the umami and/or umami richness is evaluated using a taste sensor.

25. The food according to claim 22 or 23, wherein the food is soup, noodles, rice, or a combination thereof, and the food includes potassium ion at an added potassium ion concentration of 50 ppm to 300 ppm.

26. The food according to claim 25, wherein the soup is miso soup having a pH of 5.7 to 7.1.

27. A food with enhanced noodle firmness and/or glossiness, which includes a mineral-containing composition according to any one of claims 1 to 11.
